# EUROPEAN PATENT APPLICATION

(11) **EP 0 838 253 A2**
(43) Date of publication of application: **29.04.1998**
(21) Application number: 97118183.9
(22) Date of filing: 20.10.1997
(51) Int. Cl.: B01D 29/085, B01D 61/18

(54) **Tip resistant bottle filter**

(30) Priority: 24.10.1996 US 735653
(71) Applicant: CORNING INCORPORATED, Corning, N.Y. 14831 (US)
(72) Inventor: Mathus, Gregory, Corning, NY 14831 (US)
(74) Representative: Boon, Graham Anthony

(57) **Abstract**

A filter assembly includes an angled vacuum port for providing improved stability when the filter assembly is attached to a receptacle. The vacuum port is disposed at an acute angle with respect to a longitudinal axis extending through the funnel of the filter assembly. The acute angle includes an x, or horizontal component, as well as a y, or vertical component. The downward angling of the vacuum port increases the stability and thereby decreases the incident of tipping of the receptacle and filtration assembly.

## Description

### TECHNICAL FIELD

The present application relates to a tip resistant bottle filter.

### BACKGROUND OF RELATED ART

Bottle filters and bottle filter systems are frequently utilized in laboratory settings to filter, purify, clarify or sterilize tissue culture media, serum, antibodies and other laboratory compounds. As the name implies, bottle filters are adapted to be mounted to the neck of a bottle. In use, a technician first attaches the bottle filter assembly to the neck of a receiver bottle and then connects a vacuum hose to a vacuum port which extends laterally from the adapter neck of the bottle filter assembly. The technician then pours the fluid to be filtered into the tunnel of the bottle filter assembly, being careful not to tip the bottle over as he/she pours. Once the fluid has been transferred to the tunnel, the technician turns on the vacuum connected to the filter assembly and waits for the filtered fluid to drain into the bottle. The receiver bottle may be an existing laboratory bottle, or alternatively, may be a plastic bottle supplied with the bottle filter.

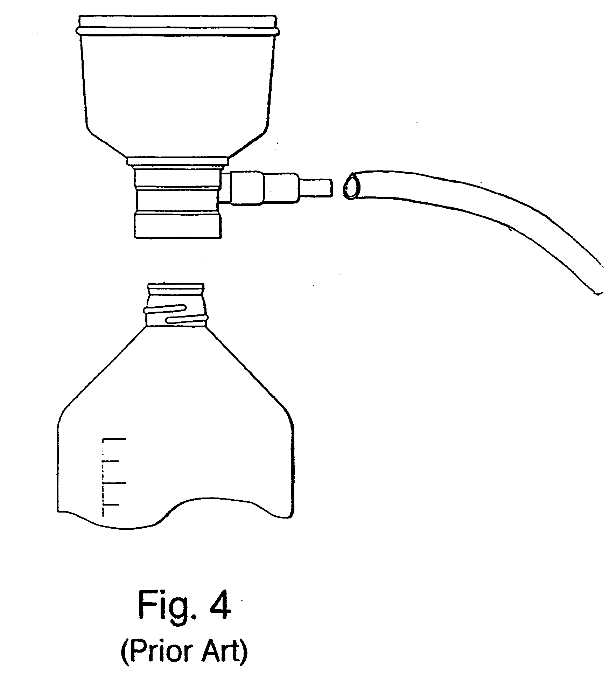

A common problem associated with the use of a conventional bottle filter assembly, illustrated in Fig. 4, is that once the vacuum line is connected to the transverse vacuum port, the empty bottle tends to become top-heavy and, therefore, likely to tip over as, or after, the funnel is filled with fluid. The weight of the attached vacuum hose and the residual tension, or "springiness", in the hose contribute to the unstable condition of the bottle and filter assembly. This is especially true with the increase in use of plastic bottles which are very light weight and, therefore, do not offer the stability of a heavy glass bottle.

In order to reduce the likelihood of tipping, technicians must often support the empty bottle with one hand during the filling operation. This, however, is awkward for the technician, and can result in the technician spilling fluid as he/she tries to introduce the fluid into the funnel with one hand. This is especially true when the filter is attached to a centrifuge tube which has an elongated configuration, thereby increasing the likelihood of tipping. To help alleviate this problem, several manufacturers have developed "compact" bottles which are shorter and include a larger diameter bottom than conventional bottles, for increased stability.

There is therefore needed an improved bottle filter assembly which is tip-resistant and which can be utilized with a variety of bottle shapes and sizes.

### SUMMARY OF THE INVENTION

In accordance with the invention there is provided a filter assembly including a funnel into which fluid to be filtered is introduced, the funnel having a longitudinally extending axis, a filter membrane supported by the filter assembly, an adapter supported by the funnel, and a vacuum port extending from the adapter at an acute angle with respect to the longitudinal axis. The angled port is provided to apply a vacuum in order to influence the flow of liquid through the filter by reducing the air pressure, or creating a vacuum, in the bottle with the angle of the port being sufficient to enhance stability of the filter assembly when the funnel is partially filled with liquid and attached to a receptacle. The angled port reduces the force applied by the vacuum hose to the bottle, thereby reducing the probability of the filter assembly and/or bottle tipping.

According to the present invention, the vacuum port is disposed at an acute angle with respect to longitudinal axis Y, and therefore includes both an x, or horizontal component, as well as a y, or vertical component. The downward angling of the vacuum port increases the stability and thereby decreases the incident of tipping of the receiving bottle or container, and the filtration assembly. This is particularly true prior to filtration, when the receiving bottle is empty and the funnel is filled with fluid (a top heavy condition). Angle preferably ranges from 30 to 60, and more preferably is approximately 45. Alternately, angle may be any acute angle, the criteria for the angle of the vacuum port being that the angle is not so great as to interfere with operation of the filter assembly, i.e. by causing tubing attached to the port to hit the side of the receiving bottle, nor should the angle be so slight as to be ineffective, i.e. does not impart increased stability to the bottle and filter assembly.

### BRIEF DESCRIPTION OF THE DRAWINGS

Fig. 1 is a side view, in partial cross-section of a preferred embodiment of a filter assembly with an angled vacuum port, attached to a receiving bottle, according to the present invention;
Fig. 2a is a detail view of an alternate embodiment of the angled vacuum port of Fig. 1;
Fig. 2b is a detail view of an alternate embodiment of the angled vacuum port of Fig. 2a;

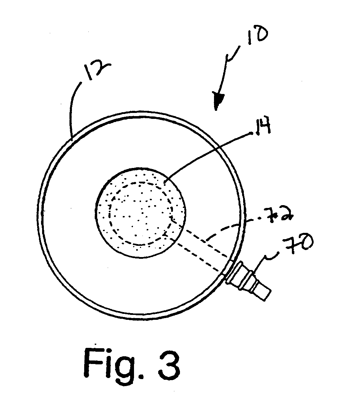

Fig. 3 is a top view of the filter assembly of Fig. 1; and
Fig. 4 is an exploded view of a prior art filter assembly with a transverse vacuum port.

### DETAILED DESCRIPTION OF THE PREFERRED EMBODIMENTS

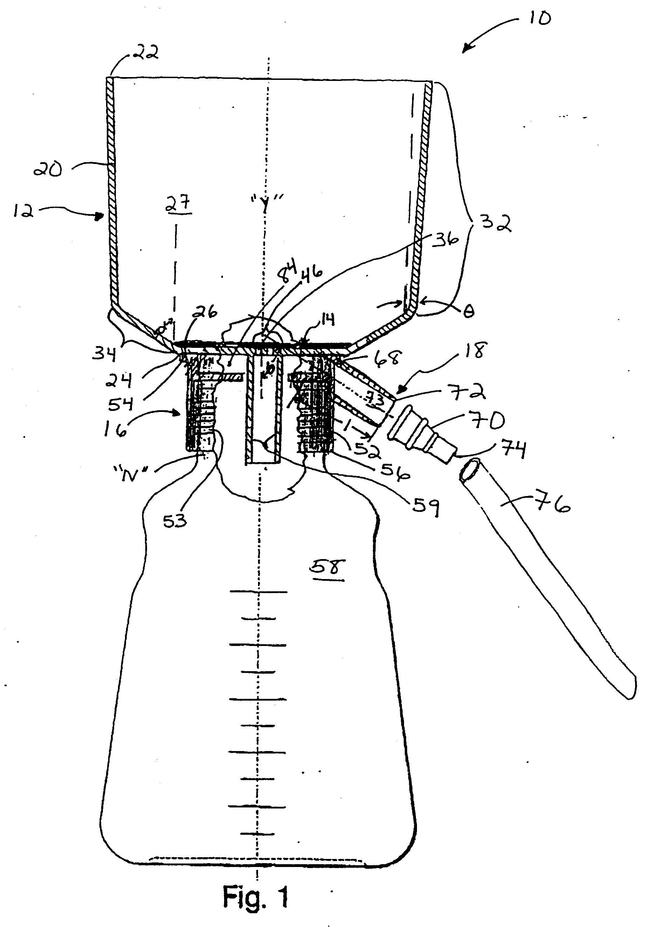

Referring initially to Fig. 1, bottle filter assembly **10** includes a funnel **12**, a filter **14,** an adapter **16** and a vacuum port **18.** In the present embodiment the aforementioned parts are separately fabricated and permanently secured together but may, alternately, be integrally formed.

Funnel **12** preferably includes a generally cylindrical side wall **20** which is disposed about a longitudinally extending, vertical axis, "Y", and a generally horizontal, or flat, bottom wall **26**. Side wall **20** is open at a first end **22**, in order to receive a fluid to be filtered, and is capped at a second end **24**, opposite the first end, by bottom wall **26**. Side and bottom walls **20** and **26**, respectively, define an upper chamber, or reservoir **27**, which receives the fluid to be filtered. Side wall **20** is preferably fabricated from a clear, plastic material in order to readily view the fluid as it is being poured and filtered. A lip **28** is preferably molded about first end **22** for receiving a corresponding coverall lid (not shown). The lid, when positioned over the first end of wall **20**, allows air to enter the funnel under the lid while preventing debris from falling into the funnel.

In the present embodiment, side wall **20** has an upper section **32** which is slightly tapered at an angle from vertical, approximately 1 ½, and a lower section **34** which is more sharply inclined at an angle from the vertical, approximately 60 in the present embodiment. Alternately, side wall **20** may be tapered at any number of angles, or may not be tapered at all. In the present embodiment, due to its tapered configuration, side wall **20** has a decreasing diameter in a downward direction, until it reaches the generally flat bottom wall **26**.

Bottom wall **26** supports filter membrane **14**, for example by use of a filter grid support, as is known in the art. Preferably bottom wall **26** is integrally molded with side wall **20** and includes a central portion **46** having an opening **36** disposed therethrough. The tapered configuration of side wall **20** helps direct the fluid to be filtered toward opening **36**, once the fluid has passed through filter **14**.

Filter membrane **14** may be any of a variety of commercially available membranes, the type of filter chosen being a function of the fluid to be filtered. The filter may typically be either an ultralow binding cellulose acetate membrane or a low binding sterilizing grade polyethersulfone membrane. Many other filter materials may also be used, such as nylon, urethane, polypropylene and fiberglass. The pore sizes may typically vary from approximately .2 to .45 microns.

Integrally molded or bonded to the bottom wall **26** is neck adapter **16**. Adapter **16** is generally cylindrical in shape and is preferably concentric about axis "Y". In the present embodiment adapter **16** includes a wall **52** having an upper end **54** which is partially open to and molded or bonded to the bottom wall **26**, and a lower end **56** which is open to, preferably concentric with, and adapted to fit around a neck "N" of bottle **58**. Adapter **16** preferably includes a stem member **59** disposed therein, the stem member extending from opening **36** of wall **26**, such that any fluid which flows from the upper chamber **27** through filter **14** and opening **36** will enter and flow through the stem member, without flowing into the plenum chamber and into the vacuum line, as is known in the art.

In the present embodiment cylindrical wall **52** preferably includes an internally threaded collar **53** which is sized to screw onto the neck of a standard size media bottle **58**. Alternately, other conventional means may be utilized to attach filter assembly **10** to bottle **58**, such as a snap-fit assembly. A sealing gasket is also utilized to form a seal between the adapter and bottle. The seal enables a vacuum to be applied through vacuum port **18**, to the interior of the adapter, so as to maintain a negative pressure in the bottle and then draw media or other fluid from the funnel **12**, through the filter membrane **14** and adapter **16** and into the bottle **58**, or other container or receptacle on which the filter assembly is mounted.

With continued reference to Fig. 1, vacuum port **18** is preferably integrally formed at a first end **68** thereof with adapter **16**, and is adapted to matingly receive a corresponding nipple, or universal vacuum connector **70** at a second end **72**, opposite the first end thereof. Vacuum port **18** is preferably constructed of a generally rigid or semi rigid plastic, such as a styrene, or polyolefin-type resin, includes a bore **73** extending along its length, "1", which communicates with a central opening **74** of vacuum connector **70**. Vacuum connector **70** is, in turn, designed to be connected to tubing **76** which is connected to a vacuum pump or central vacuum supply (neither shown) when the device is in use.

Unlike conventional filter assemblies, such as the prior art device shown in Fig. **4**, vacuum port **18** extends from adapter **16** at an angle with respect to axis "Y" (Fig. 1). By angling port **18**, both a vertical and horizontal directional component are imparted by port **18** on bottle filter assembly **10**. Conventional devices (Fig. 4) extend laterally, or 90 from vertical, and therefore only impart a horizontal component to conventional bottle filter assemblies. Thus, in conventional devices when the funnel is filled with fluid and the receiving bottle is substantially empty, the bottle and filter assembly become particularly unstable due to the weight and/or residual tension of the tubing, thereby increasing the likelihood that the bottle and filter assembly will tip over. This is especially true when lightweight, plastic bottles, are employed. As filtration proceeds, the receiver bottle fills with filtrated liquid, thereby increasing the overall stability of the bottle and filter assembly.

According to the present invention, port **18** is disposed at an angle, , with respect to vertical axis Y, and therefore includes both an x, or horizontal component, as well as a y, or vertical component. The downward angling of port **18** increases the stability and thereby decreases the incident of tipping of bottle **58** and filter assembly **10**. This is particularly true prior to filtration, when bottle **58** is empty and funnel **12** is filled with fluid. Angle is preferably in the range of approximately 30 to approximately 60, and is approximately 45 in the present embodiment. Angle may be any acute angle, the criteria for the angle of port **18** being that the angle is not so great as to interfere with operation of the filter assembly, i.e. the angle should preferably be great enough to clear both the hand of the technician and the bottle, nor should the angle be so slight as to be ineffective, i.e. does not impart increased stability to the bottle and filter assembly.

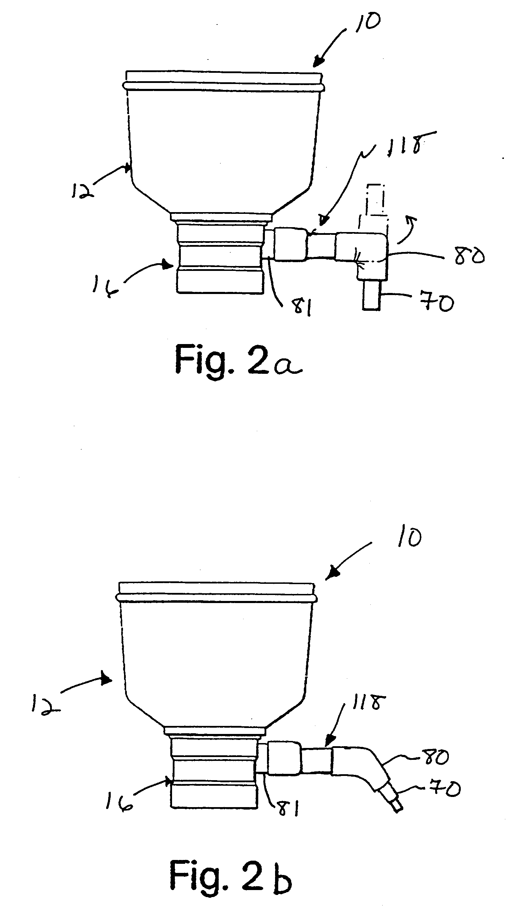

Alternately, as shown in Fig. 2a, a port assembly **118** may be utilized in place of angled port **18**. Port assembly **118** includes a conduit **81** which extends substantially horizontal from adapter **16**, and an angled adapter **80** in fluid communication with conduit **81**. Angled adapter **80** may replace vacuum connector **70**, or alternately, may be adapted to receive vacuum connector **70** at one end thereof. Adapter **80** is preferably a right-angle adapter, but alternatively may be any angled configuration, as shown in Fig. 2b, as long as the angle does not interfere with operation of the filter assembly, i.e. by hitting the bottle or hand of the technician, and provided that the angled adapter increases the stability of the bottle and filter assembly, as described above. Adapter **80** is preferably rotatable about port **118**, such that tubing **76** can be selectively positioned with respect to bottle **58** and filter assembly **10**, as shown in Fig. 2a.

In operation, a technician screws adapter **16** onto the neck, N, of bottle **58**, which may be any type of container, with varying dimensions. The technician then attaches tubing **76** to vacuum connector **70** disposed about angled vacuum port **18**. Alternately, the technician can attach the tubing to angled adapter **80** connected to transverse port **118**. In either case, the bottle and filter assembly is provided with an increased stability as the technician pours the fluid to be filtered into the funnel **12**. Alter the fluid is introduced into funnel **12** the vacuum pump is turned on. When the vacuum is applied through tubing **76**, a low pressure region is established in the bottle (through the adaptor **16**), particularly in chamber **84**, below the bottom wall **26** of the funnel **12** and beneath filter membrane **14**. Because the neck, "N", of the bottle **58** is sealed to the adapter by a gasket or seal surface (not shown), the vacuum may be applied beneath the filter membrane **14** in the adapter **16** without difficulty. The low pressure created in the bottle influences the flow of the fluid to be filtered through filter membrane **14,** to the opening **36** and down the stem member into the bottle **58**, or container, onto which the filter assembly is mounted. At the completion of filtration, filter assembly **10** is removed from bottle **58** and is preferably discarded.

It will be understood that various modifications may be made to the embodiment disclosed herein. For example, although the vacuum port is illustrated with one type of filter assembly, the port may be utilized with a variety of filter assemblies, including filter assemblies utilized with centrifugal tubes or any kind of bottle top filter or filter capsule that uses a vacuum port. In addition, the receiving bottle may be any number of shapes and sizes, and may be any type of container utilized with the filter assembly. Therefore, the above description should not be construed as limiting, but merely as exemplifications of a preferred embodiment. Those skilled in the art will envision other modifications within the scope spirit of the invention.

## Claims

1. A filter assembly adapted for use with a receptacle comprising:
a funnel having an open end through which fluid to be filtered is introduced, at least one side wall which retains the fluid to be filtered and an opening through which a filtered fluid passes, the funnel having a longitudinal axis extending therethrough;
a filter membrane supported by the filter assembly relative to the opening;
an adapter supported by the funnel; and
a vacuum port for applying a vacuum to influence the flow of liquid through the filter membrane, the vacuum port extending from the adapter at an angle with respect to the longitudinal axis sufficient to enhance the stability of at least one of the filter assembly or receptacle when a vacuum tube is attached thereto.

2. The filter assembly according to Claim 1, wherein the angle is in the range of approximately 30 to approximately 60 degrees.

3. The filter assembly according to Claim 2, wherein the angle is approximately 45 degrees.

4. The filter assembly according to Claim 1, wherein the vacuum port comprises a conduit and an angled adapter.

5. The filter assembly according to Claim 4, wherein the angled adapter is a right angle adapter.

6. The filter assembly according to Claim 1, further comprising a vacuum connector disposed at least partially about the vacuum port.

7. The filter assembly according to Claim 6, further comprising flexible tubing connected to the vacuum connector at one end thereof.

8. The filter assembly according to Claim 4, further comprising a vacuum connector disposed at least partially about the angled adapter.

9. The filter assembly according to Claim 8, further comprising flexible tubing connected to the vacuum connector at one end thereof.

10. The filter assembly according to Claim 1, wherein the funnel further includes a bottom wall supporting the filter membrane.

11. The filter assembly according to Claim 1, wherein the assembly is mounted to a receptacle.

12. The filter assembly according to Claim 11, wherein the receptacle is a compact bottle.
